# FASCICULE DE BREVET EUROPEEN

(11) **EP 3 393 893 B1**
(45) Date de publication et mention de la délivrance du brevet: **05.02.2020**
(21) Numéro de dépôt: 16825823.4
(22) Date de dépôt: 12.12.2016
(51) Int. Cl.: B62D 35/00, B62D 37/02

(54) **DISPOSITIF DE MANOEUVRE D'UN VOLET AERODYNAMIQUE**
VORRICHTUNG ZUM MANÖVRIEREN EINER AERODYNAMISCHEN KLAPPE
DEVICE FOR MANOEUVRING AN AERODYNAMIC FLAP

(30) Priorité: 22.12.2015 FR 1563021
(43) Date de publication de la demande: 31.10.2018
(73) Titulaire: Compagnie Plastic Omnium, 69007 Lyon (FR)
(72) Inventeur: PARRA, Stéphane, 69120 Vaulx-en-velin (FR); GILOTTE, Philippe, 01470 Benonces (FR)
(74) Mandataire: LLR
(86) Numéro de dépôt international: PCT/FR2016/053325
(87) Numéro de publication internationale: WO 2017/109327

(56) Documents cités:
- EP-A2- 1 118 529
- DE-A1-102011 015 009
- JP-A- 2008 168 843

## Description

L'invention a pour objet un dispositif mécanique de manoeuvre apte à déployer ou à replier un volet aérodynamique utilisé à titre d'exemple dans les véhicules automobiles pour modifier les conditions d'entrée d'air dans un conduit de ventilation
Le document DE 10 2011 015 009 A1 est considéré comme l'état de la technique le plus proche de l'objet de la revendication 1.

Ce volet occupe une position de repli dans laquelle, le plan du volet est intégré dans un logement aménagé dans le plan de la carrosserie avec laquelle le volet se confond , et une position déployée dans laquelle le volet vient contrarier l'écoulement de l'air de manière à dévier une partie du flux et obtenir un effet aérodynamique permettant de diminuer les pertes aérodynamiques en aval du volet.

De manière optionnelle, le volet peut également servir d'obturateur du conduit de ventilation.

A titre d'exemple, un volet de ce type peut être disposé sous le parechoc avant à l'entrée de la bouche de ventilation moteur inférieure.

D'autres utilisations mettant en œuvre un volet aérodynamique mobile peuvent également être envisagées. C'est le cas par exemple d'un déflecteur d'air disposé sur le toit au niveau de l'ouvrant de toit pour améliorer les conditions de confort sonore lorsque l'ouvrant de toit est ouvert ou encore, du volet équipant le hayon arrière, ou les ailes, pour modifier les appuis aérodynamiques du véhicule lorsque ce dernier roule à grande vitesse.

De manière classique, le mécanisme de manoeuvre du volet comprend un moteur couplé à un motoréducteur agissant sur un axe de rotation situé sur un des bords latéraux du volet, et autour duquel le volet pivote ou bascule pour passer d'une position à une autre.

On observe toutefois que ce type de mécanisme présente plusieurs inconvénients.

En effet, pour opérer la manoeuvre, il est nécessaire de prévoir un moteur de puissance relativement importante pour générer un couple d'ouverture apte à s'opposer au couple engendré par la pression aérodynamique s'exerçant sur le volet lorsque le véhicule roule à grande vitesse.

L'invention a pour objet de limiter cet inconvénient.

Le dispositif de manoeuvre proposé a pour objet d'animer en mouvement un volet aérodynamique disposé sur un véhicule automobile. Ce dispositif de manoeuvre se caractérise en ce qu'il comprend des moyens mécaniques pour faire passer le volet d'une position de repli vers une position déployée, en réalisant des mouvements selon un ordre donné :
- sortie du volet tout en conservant le plan du volet parallèle à la direction d'un flux d'air circulant autour du volet lorsque le véhicule est en mouvement, de sorte que la pression aérodynamique exercée sur le volet est sensiblement nulle puis,
- pivotement du volet autour d'un axe de pivotement passant sensiblement par un centre de poussée aérodynamique du volet, de sorte que le couple appliqué sur l'axe de pivotement et résultant des forces aérodynamiques s'exerçant sur le volet est sensiblement nul.
et réciproquement d'une position déployée vers une position de repli en réalisant les dits mouvements dans l'ordre inverse.

Ce mode de déploiement permet de réduire le couple moteur nécessaire aux seuls mouvements de sortie et de pivotement.

Il va de soi que, lorsque l'angle d'incidence du volet augmente quand ce dernier bascule autour de son axe de pivotement, la force aérodynamique exercée par l'air sur le volet augmente également. Aussi, des moyens particuliers doivent être prévus pour maintenir le volet en position déployée une fois ce mouvement achevé.

Comme on le verra par la suite, ces moyens peuvent utilement être distincts de l'élément moteur entrainant le dispositif mécanique, de sorte que le moteur n'est sollicité que pour assurer les changements de position, et qu'il n'est plus nécessaire de maintenir le moteur sous tension lorsque le volet aérodynamique est en position déployée.

Bien que de nombreux arrangements mécaniques sont envisageables pour réaliser le mouvement de déploiement et de repli selon l'invention, le dispositif de manoeuvre est basé sur des moyens mécaniques originaux qui comprennent isolément ou en combinaison les caractéristiques suivantes :
- les moyens mécaniques comprennent un axe de rotation secondaire, parallèle à l'axe de pivotement, autour duquel sont articulés un premier basculeur, relié au volet aérodynamique, par une première biellette, et dont le changement de position entraine le mouvement de sortie ou de rentrée du volet, et un deuxième basculeur, relié au volet par une deuxième biellette, et dont le changement de position entraine le mouvement de pivotement du volet.
- la première et la deuxième biellette sont rattachées, par une première et une deuxième articulation disposées respectivement aux deux extrémités de chacune des biellettes et dont les axes sont parallèles à l'axe de pivotement, à une face du volet d'une part et auxdits basculeurs d'autre part, et les projections sur un plan perpendiculaire à l'axe de pivotement des axes desdites articulations sont disposées sensiblement aux quatre coins d'un parallélogramme déformable.
- la première biellette est reliée au volet par sa première articulation dont l'axe se confond avec l'axe de pivotement, et au premier basculeur par sa deuxième articulation dont l'axe se confond avec l'axe de rotation secondaire, de sorte que la première biellette pivote autour de l'axe de rotation secondaire lorsque le premier basculeur change de position.
- la deuxième biellette est reliée au second basculeur par sa deuxième articulation disposée radialement à une distance d donnée de l'axe secondaire, et au volet par sa première articulation disposée à la même distance d de l'axe de pivotement du volet.
- les positions des biellettes sont arrangées de sorte qu'un plan, passant par l'axe secondaire et par l'axe de l'articulation de la deuxième biellette sur le deuxième basculeur, est sensiblement parallèle au plan du volet.
- les moyens mécaniques comprennent une roue d'entrainement animée en rotation autour d'un axe principal parallèle à l'axe de pivotement, au moins une face du disque formé par la roue d'entrainement comportant une broche permettant de déplacer en rotation d'une position à une autre et inversement, respectivement le premier et le deuxième basculeur.
- chaque basculeur comprend une fente radiale dans laquelle circule une broche pour faire pivoter ledit basculeur d'une position à une autre autour de l'axe secondaire.
- la roue d'entrainement comprend au moins un disque de blocage circulaire, de même axe de rotation que la roue d'entrainement, disposé en surélévation sur chacune des faces du disque formé par la roue d'entrainement comportant une broche, dont le rayon est inférieur à la distance à l'axe principal de ladite broche, et placé en vis-à-vis d'au moins un basculeur.
- la roue d'entrainement comprend deux disques de blocage disposés chacun sur une des faces du disque formé par la roue d'entrainement, chacune de ces faces comportant une broche, et dans lequel les basculeurs sont disposés au droit de chacun des disques de blocage, de part et d'autre du disque formé par la roue d'entrainement.
- chaque basculeur comprend deux découpes semi-circulaires, définissant respectivement une première et une seconde position du basculeur, disposées de part et d'autre de la fente radiale, chaque découpe ayant un rayon égal au rayon du disque de blocage en vis-à-vis duquel ledit basculeur est placé.
- lorsqu'un basculeur est placé dans une position, le centre d'une découpe semi circulaire est disposé sur l'axe principal, de sorte que ledit basculeur est bloqué en rotation par le disque de blocage en vis-à-vis duquel il est placé.
- lorsque le premier et le second basculeur sont placés chacun dans une position donnée, le couple appliqué sur l'axe de rotation principal et résultant de forces s'exerçant sur le volet est nul.
- chaque disque de blocage comporte un évidement disposé radialement au droit de la broche, de manière à autoriser le pivotement du basculeur lorsque ce dernier change de position.
- le volet est en position rentrée lorsque le premier basculeur est dans une première position,
- le volet est en position sortie lorsque le premier basculeur est dans une deuxième position.
- le volet est parallèle au flux d'air circulant sur l'élément de carrosserie supportant le volet lorsque le véhicule est en mouvement, lorsque le deuxième basculeur est dans une première position,
- le volet est en position pivotée, lorsque le deuxième basculeur est dans une seconde position.
- lorsque la roue d'entrainement effectue un parcours angulaire inférieur à 360°, les dispositions respectives des basculeurs et des broches sont ajustées angulairement autour de l'axe principal de sorte que le changement de position du premier basculeur s'effectue lorsque le deuxième basculeur est disposé dans la première position, et que le changement de position du deuxième basculeur s'effectue lorsque le premier basculeur est disposé dans la seconde position.
- la roue d'entrainement est mise en rotation sous l'action d'un moteur accouplé à un motoréducteur.

L'invention sera mieux comprise à la lecture des figures annexées, qui sont fournies à titre d'exemples, et ne présentent aucun caractère limitatif, dans lesquelles :
- la figure 1 est une vue en perspective simplifiée des moyens mécaniques retenus.
- les figures 2, 3 et 4 permettent de visualiser le fonctionnement des moyens mécaniques lors du mouvement de sortie du volet.
- les figures 5, 6, 7 et 8 permettent de visualiser le fonctionnement des moyens mécaniques lors du mouvement de pivotement du volet.
- la figure 9 est une vue en perspective simplifiée d'un dispositif de manoeuvre monté sur le parechoc avant d'un véhicule automobile.

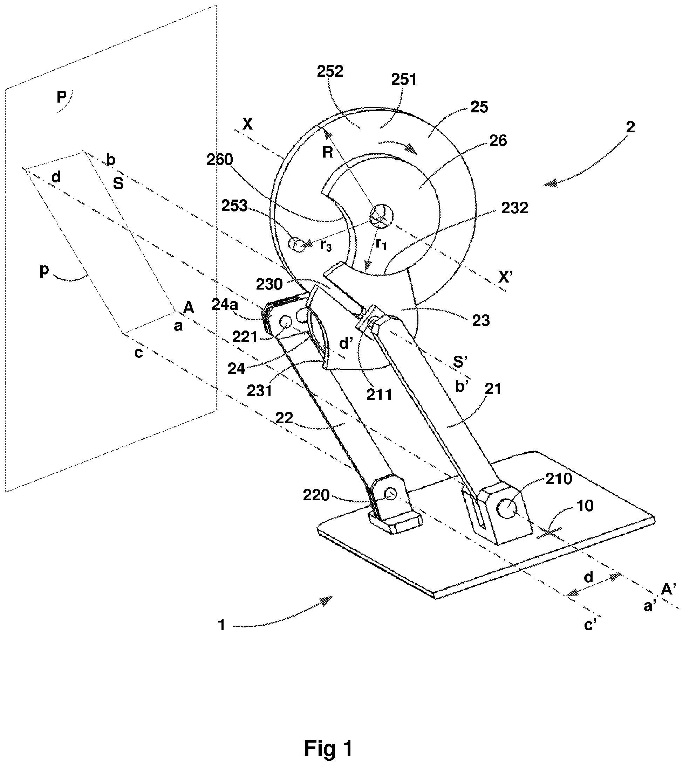

Le dispositif de manoeuvre illustré à la figure 1 comprend un volet aérodynamique 1 relié par une première et une deuxième biellette, respectivement 21 et 22 à des moyens mécaniques conçus pour animer le mouvement de sortie et de pivotement du volet.

Le dispositif de manoeuvre servant de support à la présente description concerne un volet situé à l'avant du véhicule en partie basse du parechoc. Ce type de volet aérodynamique passe alternativement d'une position repliée à une position déployée dans laquelle il oriente le flux d'air pour améliorer l'aérodynamique du véhicule et réduire les pertes de charges avales en soubassement. Etant placé à proximité du sol, une attention particulière est également apportée à la vitesse de repli pour éviter que le volet soit endommagé par des obstacles détectés par un radar placé à l'avant du véhicule.

Le volet, comprend un centre de poussée aérodynamique 10 dont l'emplacement est déterminé, en théorie, par la forme, par l'angle d'incidence du volet et par la vitesse du flux d'air circulant autour du volet lorsque le véhicule est en mouvement. Bien que cette position théorique soit variable, on peut malgré tout déterminer expérimentalement une position moyenne. Cette position est proche du centre géométrique du volet lorsque ce dernier a par exemple une forme plane.

Lorsque l'angle d'incidence du volet change, le couple provenant de la résultante des forces aérodynamiques engendrées par le flux d'air appliqué autour d'un axe de pivotement AA', situé sensiblement dans le plan du volet et passant sensiblement par le centre de poussée aérodynamique 10 est donc proche de zéro.

La première biellette 21 est reliée au volet par une première articulation 210 d'axe aa'. On s'arrange alors pour que l'axe aa' soit sensiblement confondu avec l'axe de pivotement AA' passant par le centre de poussée 10.

La première biellette 21 est attachée par une seconde articulation 211 à un premier basculeur 23. La première biellette 21 est bloquée en rotation par rapport au premier basculeur 23 de sorte que la première biellette 21 et le premier basculeur 23 peuvent éventuellement former une pièce unique articulée librement en rotation autour de l'axe SS'.

. Le premier basculeur 23 pivote autour d'un axe de rotation secondaire SS' confondu avec l'axe de rotation bb' de la deuxième articulation 211 de la première biellette 21. Le mouvement de rotation du premier basculeur 23 autour de l'axe SS' entraine donc le mouvement de rotation de la première biellette 21 autour de ce même axe.

L'axe SS' est parallèle à l'axe de pivotement AA'. Cet axe est fixe dans le repère formé par le véhicule.

Le volet 1 est également relié aux moyens mécaniques par une deuxième biellette 22. La deuxième biellette 22 est reliée au volet par une première articulation 220 d'axe cc' parallèle à l'axe de pivotement AA' et distante de cet axe d'une longueur d. L'autre extrémité de la deuxième biellette est reliée par une deuxième articulation 221, d'axe dd' parallèle à l'axe de pivotement AA', à un deuxième basculeur 24, 24a. Le deuxième basculeur est articulé librement en rotation autour de l'axe secondaire SS'. L'axe dd' est distant de l'axe de rotation secondaire SS' d'une distance d.

On observera ici que le plan du volet peut être assimilé au plan passant par les axes AA' et cc'. Aussi, pour obtenir les meilleurs effets, on cherchera à réduire l'encombrement des articulations 210 et 220 autant que faire se peut, pour que la distance entre le plan passant par les axes AA' et cc', assimilé au plan du volet, et un plan parallèle à ce plan et passant par le centre de poussée aérodynamique, correspondant sensiblement au plan moyen du volet, soit la plus faible possible. Lorsque le volet a une forme plus ou moins galbée pour s'adapter au profil de la carrosserie, ce plan moyen peut être défini, expérimentalement de manière à disposer en conséquence les axes AA' et cc'.

Le deuxième basculeur 24 peut comporter un bras de transfert 24a, fixé sur le deuxième basculeur 24, à l'extrémité duquel est positionnée l'articulation 221 avec la deuxième biellette 22. Le bras de transfert 24a est bloqué en rotation par rapport au deuxième basculeur 24. Le deuxième basculeur 24 et le bras de transfert 24a peuvent également former une pièce unique.

On s'arrange alors pour que les distances entre les axes de la première et de la deuxième articulation de chacune des biellettes soient sensiblement identiques, de sorte que la projection sur un plan fictif P, perpendiculaire à l'axe de pivotement AA', des axes SS' (aa'), bb', cc' et dd' forme un parallélogramme déformable p.

Le plan du volet est donc sensiblement parallèle à un plan passant par l'axe secondaire SS' et par l'axe dd'.

Comme cela sera exposé en détail ultérieurement, sous l'action du premier basculeur 23, la rotation, de la première biellette autour de l'axe SS' commande le mouvement de sortie du volet. En maintenant le deuxième basculeur en position fixe autour de l'axe de rotation secondaire SS', le plan du volet occupe, pendant le mouvement de sortie, des positions successives qui sont toutes parallèles entre elles. Ce plan fictif peut utilement être ajusté pour être parallèle à la direction du flux d'air circulant sur l'élément de carrosserie supportant le volet lorsque le véhicule est en mouvement, de sorte que la pression aérodynamique exercée sur le volet pendant le mouvement de sortie est sensiblement nulle. L'effort moteur est réduit aux seules forces nécessaires pour engendrer le mouvement de rotation du premier basculeur.

Une fois le volet sorti, et en maintenant fixe la position du premier basculeur, la rotation du deuxième basculeur 24 autour de l'axe SS' entraine le mouvement de pivotement du volet autour de l'axe de pivotement AA'. Comme cela a été évoqué ci-dessus cet axe AA' passe sensiblement par le centre de poussée aérodynamique 10, de sorte que le couple nécessaire transmis par la deuxième biellette 22 pour faire pivoter le volet autour de l'axe AA' est faible.

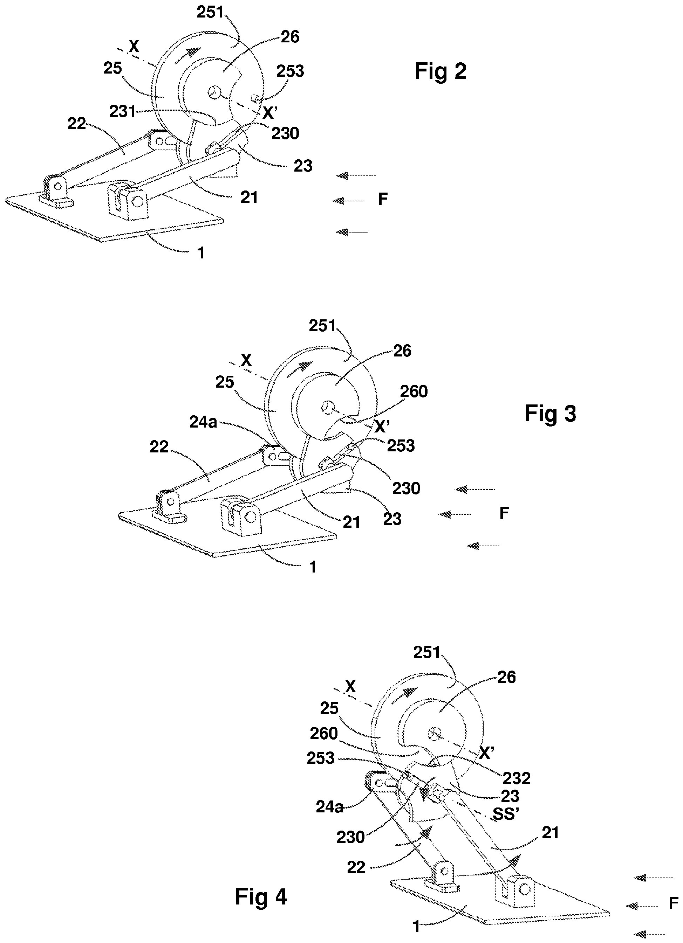

Les moyens mécaniques illustrés à la figure 2 comprennent également une roue d'entrainement 25 de rayon R, entrainée en rotation autour d'un axe de rotation principal XX' par un ensemble moteur (non représenté). L'axe de rotation principal est parallèle à l'axe de pivotement AA'. Cet axe est également fixe dans le repère formé par le véhicule.

La face 251 du disque formé par la roue d'entrainement 25 supporte une broche 253 s'étendant axialement depuis la face 251, et disposée à une distance r₃ de l'axe de rotation principal XX'. Le premier basculeur 23 est disposé du côté de la face 251 supportant la broche 253. Ce premier basculeur comporte une fente 230 orientée radialement par rapport à l'axe de rotation secondaire SS'. Le premier basculeur 23 est disposé de sorte que, lorsque la roue d'entrainement est mise en rotation, la broche 253 pénètre dans la fente 230 et entraine le premier basculeur en rotation autour de l'axe de rotation secondaire SS'. Le premier basculeur passe alors d'une position à une autre. En poursuivant la rotation de la roue d'entrainement la broche 253 sort de la fente 230 située sur le premier basculeur.

La mise en rotation de la roue d'entrainement dans le sens inverse permet au basculeur de revenir à la position précédente selon les mêmes principes que ceux énoncés ci-dessus.

La roue d'entrainement comprend également, sur la même face 251 que celle qui supporte la broche 253, un disque de blocage 26, d'axe XX' disposé en surélévation par rapport au plan formé par la face 251. Ce disque de blocage a un rayon r₁, inférieur à la distance r₃ séparant la broche de l'axe XX'.

Le premier basculeur 23 comprend deux découpes semi circulaires 231 et 232, de même rayon r₁ que le disque de blocage 26, et disposées de part et d'autre de la fente 230.

Le premier basculeur 23 est alors disposé de sorte que, lorsqu'il occupe une position donnée, le centre d'une découpe semi circulaire soit placé sur l'axe principal XX'. Le bord extérieur de la découpe semi circulaire vient alors en appui contre le disque de blocage, ce qui interdit la rotation du basculeur autour de son axe et maintient ce dernier dans sa position lorsque la roue d'entrainement et le disque de blocage poursuivent leur rotation autour de l'axe XX'.

Le disque de blocage 26 comporte également un évidement 260, disposé au droit de la broche 253, dont le dimensionnement est ajusté de manière à autoriser la rotation du basculeur 23 lorsque ce dernier est engagé par la broche 253 et effectue sa rotation autour de l'axe SS' lors du changement de position.

Les deux découpes semi circulaires, respectivement 231 et 232, définissent ainsi une première et une deuxième position occupées par le premier basculeur 23. Ces deux positions sont stables.

L'écart angulaire entre ces deux positions est défini géométriquement par la distance entre l'axe de rotation principal SS' et l'axe principal XX', par le rayon r₁ du disque de blocage, et par la position r₃ de la broche. Cet écart angulaire est ajusté pour que la rotation du premier basculeur 23 d'une position à une autre entraine le passage du volet de la position de repli dans laquelle le volet est rentré, à la position de sortie.

Les indications qui précèdent s'appliquent mutatis mutandis au deuxième basculeur 24 qui commande le mouvement de la biellette 22 et le pivotement du volet autour de l'axe AA'.

Moyennant des changements substantiels du mécanisme, le basculeur 24 pourrait être situé sur la même face 251 que le basculeur 23. Toutefois, de manière préférentielle, on disposera le deuxième basculeur 24 du côté de la face 252 du disque formé par la roue d'entrainement 25, et opposée à la face 251. Le deuxième basculeur 24 est également articulé autour de l'axe de rotation secondaire SS'.

Le rayon r₂ du disque de blocage 27 (non visible sur la figure 1) disposé en surélévation de la face 252, le positionnement radial r₄ de la broche 254 circulant dans la fente 240 (non visible sur la figure 1) du deuxième basculeur 24 et disposé sur la face 252, pourront éventuellement être identiques, ou non, respectivement au rayon r₁ ou r₃.

Les rayons des découpes semi circulaires 241 et 242 (non visibles sur la figure 1) seront adaptés en conséquence.

Les positions angulaires respectives des broches 253 et 254 autour de l'axe principal XX' sont ajustées de sorte que, lorsque la roue d'entrainement effectue un parcours angulaire inférieur à 360°, le changement de position du premier basculeur 23 s'effectue lorsque le deuxième basculeur 24 est disposé dans la première position, et que le changement de position du deuxième basculeur 24 s'effectue lorsque le premier basculeur 23 est disposé dans la seconde position.

Ces moyens mécaniques originaux permettent d'une part de respecter par construction la cinématique des mouvements respectifs de sortie et de pivotement tels que décrits ci-dessus, et de s'assurer d'autre part que la rotation du premier basculeur 23 est bloquée par le disque de blocage 26 avant d'entamer le pivotement du volet autour de l'axe de pivotement. En effet, comme cela a déjà été évoqué, bien que le couple nécessaire pour effectuer ce mouvement soit théoriquement négligeable, la pression aérodynamique exercée sur le volet augmente considérablement pendant le pivotement, et un couple important autour de l'axe SS' s'exerce sur le premier basculeur 23 qui supporte la première biellette 21.

Lorsque ce premier basculeur 23 est dans la seconde position, son mouvement est bloqué par le disque 26, et on observera alors que le couple exercé par ces forces aérodynamiques sur l'axe XX', qui est l'axe moteur, est nul.

Pour augmenter la vitesse de repli du volet il est même possible d'amorcer le mouvement de rotation du premier basculeur 23 rattaché à la première biellette 21 légèrement avant la fin du mouvement de pivotement du volet en ajustant en conséquence les positions angulaires respectives des broches 253 et 254.

Le mouvement de repli du volet se fait en inversant le sens de rotation de la roue d'entrainement ce qui provoque successivement le pivotement du volet en sens inverse de manière à placer le plan du volet dans une position parallèle à la direction du flux d'air, puis la rentrée du volet.

Ainsi, le mouvement de déploiement et le mouvement de repli du volet se font en effectuant une rotation de la roue d'entrainement de moins de 360°. Ce qui permet en particulier de replier le volet extrêmement rapidement en cas de détection d'un obstacle risquant de l'endommager.

Les figures 2, 3 et 4 illustrent le mouvement de sortie du volet 1.

A la figure 2, le volet 1 est en position repliée et son plan est sensiblement parallèle au flux d'air F circulant autour de l'élément de carrosserie lorsque le véhicule est en mouvement et sur lequel il est fixé. Le premier basculeur 23 est dans la première position et sa rotation autour de l'axe SS" est bloquée par l'engagement du disque 26 dans la découpe semi circulaire 231. Le deuxième basculeur est également dans la première position, de sorte que le plan du volet est parallèle au flux d'air.

La roue d'entrainement 251 est mise en rotation, et la broche 253 pénètre dans la fente 230 du premier basculeur, forçant celui-ci à tourner autour de l'axe SS', comme cela est illustré à la figure 3. L'évidement 260 libère un espace permettant au premier basculeur 23 de passer de la première à la seconde position.

La première biellette 21 tourne autour de l'axe SS' et entraine la rotation de la deuxième biellette 22 autour de l'axe cc', ce qui amène le volet 1 en position sortie comme cela est illustré à la figure 4.

Le deuxième basculeur 24 est maintenu dans sa première position, et le volet 1 reste toujours parallèle au flux d'air F.

Lorsque le premier basculeur 23 est dans la seconde position, le disque 26 engage la découpe semi-circulaire 232. Le premier basculeur 23 et la première biellette 21 sont alors bloqués dans cette seconde position.

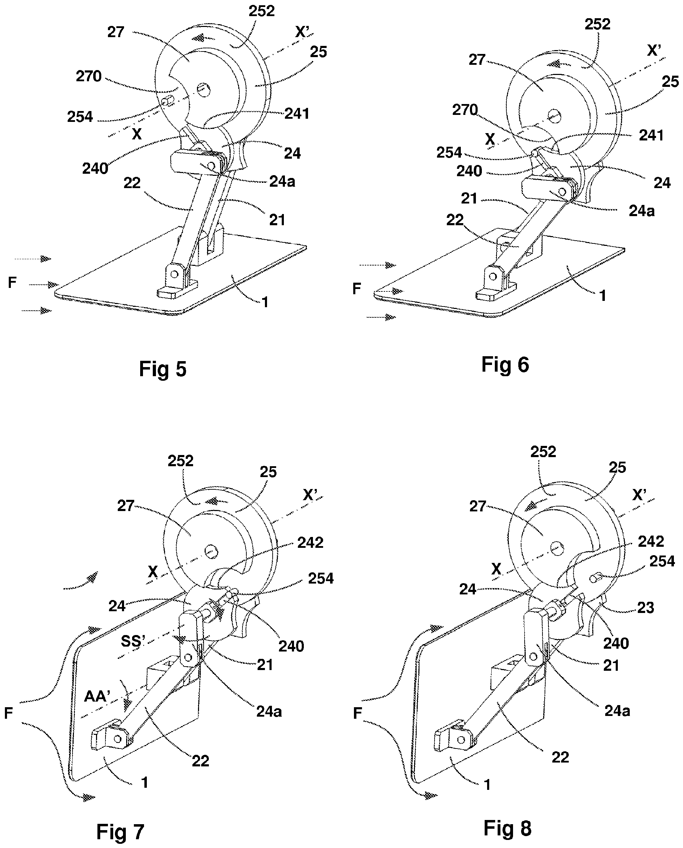

Les figures 5, 6, 7 et 8 illustrent la cinématique du pivotement du volet autour de l'axe de pivotement AA'.

La figure 5 illustre le dispositif de manoeuvre vu du côté de la face 252, dans la position déployée illustrée à la figure 4. Le disque de blocage 27 est engagé dans la découpe 241 du deuxième basculeur 24 et maintient ce dernier dans la première position.

En poursuivant la rotation de la roue d'entrainement dans le même sens que précédemment, la broche 254 engage la fente radiale 240 du deuxième basculeur 24 comme cela est représenté à la figure 6, et l'évidement 270 libère l'espace permettant au deuxième basculeur 27 de tourner autour de l'axe de rotation secondaire SS'.

Le deuxième basculeur 24 passe alors de la première à la seconde position comme cela est illustré à la figure 7. La deuxième biellette 22, dont l'axe d'articulation sur le deuxième basculeur 24 est décentré d'une distance donnée d, fait tourner le volet 1 autour de l'axe de pivotement AA'.

Le couple appliqué sur la roue d'entrainement 25 est réduit au seul couple nécessaire pour vaincre les frottements. Lesquels ne sont pas négligeables en raison de la pression exercée par le disque 26 sur le premier basculeur 23 pour le maintenir dans la seconde position.

En poursuivant sa rotation le disque 27 engage la découpe semi circulaire 242, et bloque le deuxième basculeur 24 dans la deuxième position comme cela est illustré à la figure 8.

On observe ici que la deuxième biellette 22 est reliée au deuxième basculeur 24 par l'intermédiaire d'un bras de transfert 24a. Ce bras de transfert est rendu solidaire du deuxième basculeur par une liaison fixe de sorte que le bras de transfert 24a est bloqué en rotation par rapport au deuxième basculeur 24. Ce montage a été choisi pour des raisons d'encombrement et pour permettre de loger un palier supportant l'arbre de rotation secondaire de l'axe SS'. Aussi, comme cela a déjà été évoqué, le bras de transfert 24a et le second basculeur 24 pourraient tout aussi bien former une pièce unique.

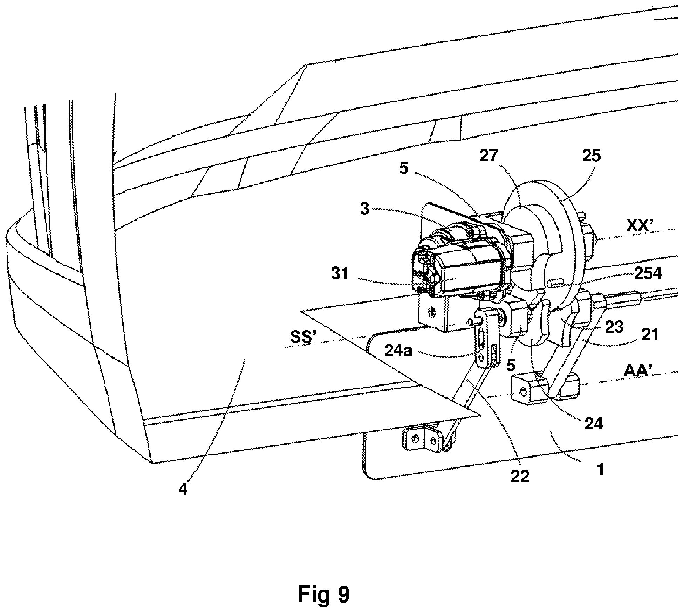

La figure 9 illustre le dispositif de manoeuvre disposé sur la paroi inférieure d'un parechoc avant 4 d'un véhicule automobile, et placé en position déployée dans laquelle le volet est sorti et pivoté. Le dispositif est monté sur un étrier 5 relié au châssis du véhicule. L'étrier 5 supporte l'arbre portant l'axe de rotation secondaire SS', et l'arbre portant l'axe principal XX'. Ce dernier est relié à un moteur d'entrainement 3 par l'intermédiaire d'un motoréducteur 31 pour entrainer la roue 25 en rotation dans un sens ou dans un autre.

Le dispositif de manoeuvre tel que décrit ci-dessus peut connaitre de nombreuses adaptations lorsque le volet aérodynamique est disposé sur d'autres parties du véhicule.

On peut ainsi envisager de commander le mouvement de chacun des basculeurs à l'aide de deux roues d'entrainement indépendantes, animées en rotation par deux groupes motoréducteurs séparés, tout en conservant une disposition géométrique dans laquelle les axes des articulations forment un parallélogramme déformable. Il est alors possible de réaliser des basculeurs comportant plus de deux découpes semi circulaires et pouvant occuper, en faisant tourner la roue d'entrainement plusieurs fois autour de l'axe principal, une pluralité de positions intermédiaires entre chacune des positions extrêmes. Cet arrangement peut s'avérer particulièrement intéressant lorsque l'on cherche par exemple à réguler la pression aérodynamique s'exerçant sur le volet en jouant sur son angle d'incidence, tout en minimisant la consommation d'énergie motrice pour faire passer le volet d'une position à une autre.

Tous ces mécanismes permettent de respecter les principes de fonctionnement faisant l'objet de l'invention, lesquels ont pour avantage particulier d'être peu consommateurs d'énergie.

### NOMENCLATURE

- 1: Volet aérodynamique
- 10: Centre de poussée aérodynamique
- 2: Moyens mécaniques.
- 21: Première biellette.
- 210: Première articulation de la première biellette.
- 211: Deuxième articulation de la première biellette.
- 22: Deuxième biellette.
- 220: Première articulation de la deuxième biellette.
- 221: Deuxième articulation de la deuxième biellette.
- 23: Premier basculeur.
- 230: Fente radiale du premier basculeur
- 231 et 232: Découpes semi-circulaires du premier basculeur.
- 24: Deuxième basculeur.
- 24a: Bras de transfert lié au basculeur 24.
- 240: Fente radiale du deuxième basculeur.
- 241 et 242: Découpes semi-circulaires du deuxième basculeur.
- 25: Roue d'entrainement.
- 251 et 252: Faces du disque formé par la roue d'entrainement.
- 253: Broche disposée sur la face 251 de la roue d'entrainement.
- 254: Broche disposée sur la face 252 de la roue d'entrainement.
- 26: Disque de blocage disposé sur la face 251 de la roue d'entrainement
- 260: Evidement du disque de blocage 26.
- 27: Disque de blocage disposé sur la face 252 de la roue d'entrainement
- 270: Evidement du disque de blocage 27.
- 3: Moteur d'entrainement.
- 31: Motoréducteur.
- 4: Parechoc de véhicule.
- 5: Etrier

- AA': Axe de pivotement.
- aa': Axe de la première articulation de la première biellette.
- bb': Axe de la deuxième articulation de la première biellette.
- cc': Axe de la première articulation de la deuxième biellette.
- dd': Axe de la deuxième articulation de la deuxième biellette.
- d: Distance entre l'axe de la première articulation de la deuxième biellette et l'axe secondaire.
- F: Flux aérodynamique
- P: Plan fictif perpendiculaire à l'axe de pivotement.
- R: Rayon de la roue d'entrainement
- r1: Rayon du disque de blocage 26.
- r2: Rayon du disque de blocage 27.
- r3: Distance à l'axe principal de la broche 253
- r4': Distance à l'axe principal de la broche 254
- SS': Axe de rotation secondaire.
- XX': Axe de rotation principal.

## Revendications

1. Dispositif de manœuvre d'un volet aérodynamique (1) disposé sur un véhicule automobile, **caractérisé en ce qu'il** comprend des moyens mécaniques (2) pour faire passer le volet (1) d'une position de repli vers une position déployée, en réalisant des mouvements selon un ordre donné :
- sortie du volet tout en conservant le plan du volet parallèle à la direction d'un flux d'air circulant autour du volet (1) lorsque le véhicule est en mouvement, de sorte que la pression aérodynamique exercée sur le volet lorsque le véhicule est en mouvement est sensiblement nulle puis,
- pivotement du volet autour d'un axe de pivotement (AA') situé dans un plan du volet et passant sensiblement par un centre de poussée aérodynamique (10) du volet (1), de sorte que le couple appliqué sur l'axe de pivotement (AA') et résultant des forces aérodynamiques s'exerçant sur le volet lorsque le véhicule est en mouvement est sensiblement nul.
et réciproquement d'une position déployée vers une position de repli en réalisant les dits mouvements dans l'ordre inverse.

2. Dispositif de manoeuvre selon la revendication 1, dans lequel les moyens mécaniques (2) comprennent un axe de rotation secondaire (SS'), parallèle à l'axe de pivotement (AA'), autour duquel sont articulés un premier basculeur (23), relié au volet aérodynamique (1), par une première biellette (21), et dont le changement de position entraine le mouvement de sortie ou de rentrée du volet (1), et un deuxième basculeur (24), relié au volet (1) par une deuxième biellette (22), et dont le changement de position entraine le mouvement de pivotement du volet(1).

3. Dispositif de manoeuvre selon la revendication 2, dans lequel la première (21) et la deuxième (22) biellette sont rattachées, par une première (210, 220) et une deuxième (211, 221) articulation disposées respectivement aux deux extrémités de chacune des biellettes (21, 22) et dont les axes (aa', bb', cc', dd') sont parallèles à l'axe de pivotement (AA'), à une face du volet (1) d'une part et auxdits basculeurs (23, 24) d'autre part, et dans lequel les projections sur un plan (P) perpendiculaire à l'axe de pivotement (AA') des axes (aa', bb', cc', dd') desdites articulations (210, 211, 220, 221) sont sensiblement disposées aux quatre coins d'un parallélogramme déformable (p).

4. Dispositif de manoeuvre selon la revendication 3, dans lequel :
- la première biellette (21) est reliée au volet (1) par sa première articulation (210) dont l'axe (aa') se confond avec l'axe de pivotement (AA'), et au premier basculeur (23) par sa deuxième articulation (211) dont l'axe (bb') se confond avec l'axe de rotation secondaire (SS'), de sorte que la première biellette (21) pivote autour de l'axe de rotation secondaire (SS') lorsque le premier basculeur (23) change de position.
- la deuxième biellette (22) est reliée au second basculeur (24) par sa deuxième articulation (221) disposée radialement à une distance d donnée de l'axe de rotation secondaire (SS'), et au volet (1) par sa première articulation (220) disposée à la même distance d de l'axe de pivotement (AA') du volet.

5. Dispositif de manoeuvre selon la revendication 4, dans lequel les positions des biellettes (21, 22) sont arrangées de sorte qu'un plan, passant par l'axe secondaire (SS') et par l'axe de l'articulation (dd') de la deuxième biellette (22) sur le deuxième basculeur (24), est sensiblement parallèle au plan du volet (1).

6. Dispositif de manoeuvre selon l'une des revendications 2 à 5, dans lequel les moyens mécaniques (2) comprennent une roue d'entrainement (25) animée en rotation autour d'un axe principal (XX') parallèle à l'axe de pivotement (AA'), au moins une face (251, 252) du disque formé par la roue d'entrainement (25) comportant une broche (253, 254) permettant de déplacer en rotation d'une position à une autre et inversement, respectivement le premier (23) et le deuxième (24) basculeur.

7. Dispositif de manoeuvre selon la revendication 6, dans lequel chaque basculeur (23, 24) comprend une fente radiale (230, 240) dans laquelle circule une broche (253, 254) pour faire pivoter ledit basculeur (23, 24) d'une position à une autre autour de l'axe de rotation secondaire (SS').

8. Dispositif de manoeuvre selon la revendication 7, dans lequel la roue d'entrainement (25) comprend au moins un disque de blocage (26, 27) circulaire, de même axe de rotation que la roue d'entrainement (XX'), disposé en surélévation sur chacune des faces (251, 252) du disque formé par la roue d'entrainement (25) comportant une broche (253, 254), dont le rayon (r₁, r₂) est inférieur à la distance (r₃, r₄) à l'axe principal (XX') de ladite broche (253, 254), et placé en vis-à-vis d'au moins un basculeur (23, 24).

9. Dispositif de manoeuvre selon la revendication 8, dans lequel la roue d'entrainement (25) comprend deux disques de blocage (23, 24) disposés chacun sur une des faces (251, 252) du disque formé par la roue d'entrainement (25), chacune de ces faces (251, 252) comportant une broche (253, 254), et dans lequel les basculeurs (23, 24) sont disposés au droit de chacun des disques de blocage (26, 27), de part et d'autre du disque formé par la roue d'entrainement.

10. Dispositif de manoeuvre selon l'une des revendications 8 ou 9, dans lequel chaque basculeur (23, 24) comprend deux découpes semi-circulaires (231, 232, 241, 242), définissant respectivement une première et une seconde position du basculeur, disposées de part et d'autre de la fente radiale (230, 240), chaque découpe semi-circulaire (231, 232, 241, 242) ayant un rayon (r₁, r₂) égal au rayon (r₁, r₂) du disque de blocage (26, 27) en vis-à-vis duquel ledit basculeur (23, 24) est placé.

11. Dispositif de manoeuvre selon la revendication 10, dans lequel, lorsqu'un basculeur (23, 24) est placé dans une position, le centre d'une découpe semi-circulaire (231, 232, 241, 242) est disposé sur l'axe principal (XX'), de sorte que ledit basculeur (23, 24) est bloqué en rotation par le disque de blocage (26, 27) en vis-à-vis duquel il est placé.

12. Dispositif de manoeuvre selon la revendication 11, dans lequel lorsque le premier et le second basculeur (23, 24) sont placés chacun dans une position donnée, le couple appliqué sur l'axe de rotation principal (XX') et résultant de forces s'exerçant sur le volet est nul.

13. Dispositif de manoeuvre selon l'une des revendications 8 à 12 dans lequel chaque disque de blocage (26, 27) comporte un évidement (260, 270) disposé radialement au droit de la broche (253, 254), de manière à autoriser le pivotement du basculeur lorsque ce dernier change de position.

14. Dispositif de manoeuvre selon l'une des revendications 3 à 13, dans lequel :
- le volet (1) est en position rentrée lorsque le premier basculeur (23) est dans une première position,
- le volet est en position sortie lorsque le premier basculeur (23) est dans une deuxième position.

15. Dispositif de manoeuvre selon l'une des revendications 3 à 13, dans lequel :
- Le volet est parallèle au flux d'air circulant sur l'élément de carrosserie supportant le volet lorsque le véhicule est en mouvement, lorsque le deuxième basculeur (24) est dans une première position,
- Le volet est en position pivotée, lorsque le deuxième basculeur (24) est dans une seconde position.

16. Dispositif de manoeuvre selon la revendication 14 prise en combinaison avec la revendication 15, dans lequel, lorsque la roue d'entrainement (25) effectue un parcours angulaire inférieur à 360°, les dispositions respectives des basculeurs et des broches sont ajustées angulairement autour de l'axe principal (XX') de sorte que le changement de position du premier basculeur (23) s'effectue lorsque le deuxième basculeur (24) est disposé dans la première position, et que le changement de position du deuxième basculeur (24) s'effectue lorsque le premier basculeur (23) est disposé dans la seconde position.

17. Dispositif de manœuvre selon l'une des revendications 6 à 16, dans lequel la roue d'entrainement (25) est mise en rotation sous l'action d'un moteur (3) accouplé à un motoréducteur (31).

## Patentansprüche

1. Vorrichtung zum Manövrieren einer aerodynamischen Klappe (1), die an einem Kraftfahrzeug angeordnet ist, **dadurch gekennzeichnet, dass** sie mechanische Mittel (2) umfasst, um die Klappe (1) aus einer eingeklappten Position in eine ausgeklappte Position zu bringen, indem sie Bewegungen gemäß einer bestimmten Reihenfolge realisiert:
- Ausfahren der Klappe unter Beibehaltung der Ebene der Klappe parallel zu der Richtung eines Luftstroms, der um die Klappe (1) herum zirkuliert, wenn das Fahrzeug in Bewegung ist, so dass der aerodynamische Druck, der auf die Klappe ausgeübt wird, wenn das Fahrzeug in Bewegung ist, im Wesentlichen gleich null ist, und dann
- Schwenken der Klappe um eine Schwenkachse (AA'), die in einer Ebene der Klappe liegt und im Wesentlichen durch ein aerodynamisches Schubzentrum (10) der Klappe (1) verläuft, so dass das Drehmoment, das auf die Schwenkachse (AA') aufgebracht wird und aus den aerodynamischen Kräften resultiert, die auf die Klappe ausgeübt werden, wenn das Fahrzeug in Bewegung ist, im Wesentlichen gleich null ist,
und umgekehrt aus einer ausgeklappten Position in eine eingeklappte Position, indem sie die Bewegungen in der umgekehrten Reihenfolge realisiert.

2. Vorrichtung zum Manövrieren nach Anspruch 1, wobei die mechanischen Mittel (2) eine sekundäre Rotationsachse (SS') umfassen, die zu der Schwenkachse (AA') parallel ist und um die herum ein erstes Kippelement (23), das mit der aerodynamischen Klappe (1) durch einen ersten Schwingarm (21) verbunden ist und dessen Positionsänderung die Ausfahr- oder Einfahrbewegung der Klappe (1) bewirkt, und ein zweites Kippelement (24), das mit der Klappe (1) durch einen zweiten Schwingarm (22) verbunden ist und dessen Positionsänderung die Schwenkbewegung der Klappe (1) bewirkt, angelenkt sind.

3. Vorrichtung zum Manövrieren nach Anspruch 2, wobei der erste Schwingarm (21) und der zweite Schwingarm (22) durch ein erstes Gelenk (210, 220) und ein zweites Gelenk (211, 221), die jeweils an den zwei Enden jedes der Schwingarme (21, 22) angeordnet sind, angesetzt sind und deren Achsen (aa', bb', cc', dd') zu der Schwenkachse (AA'), zu einer Fläche der Klappe (1) einerseits und zu den Kippelementen (23, 24) andererseits parallel sind, und wobei die Projektionen auf eine Ebene (P) senkrecht zu der Schwenkachse (AA') der Achsen (aa', bb', cc', dd') der Gelenke (210, 211, 220, 221) im Wesentlichen an den vier Ecken eines verformbaren Parallelogramms (p) angeordnet sind.

4. Vorrichtung zum Manövrieren nach Anspruch 3, wobei:
- der erste Schwingarm (21) mit der Klappe (1) durch sein erstes Gelenk (210) verbunden ist, dessen Achse (aa') mit der Schwenkachse (AA') zusammenfällt, und mit dem ersten Kippelement (23) durch sein zweites Gelenk (211) verbunden ist, dessen Achse (bb') mit der sekundären Rotationsachse (SS') zusammenfällt, so dass der erste Schwingarm (21) um die sekundäre Rotationsachse (SS') herum schwenkt, wenn das erste Kippelement (23) seine Position ändert,
- der zweite Schwingarm (22) mit dem zweiten Kippelement (24) durch sein zweites Gelenk (221) verbunden ist, das radial in einem bestimmten Abstand d von der sekundären Rotationsachse (SS') angeordnet ist, und mit der Klappe (1) durch sein erstes Gelenk (220) verbunden ist, das in dem gleichen Abstand d von der Schwenkachse (AA') der Klappe angeordnet ist.

5. Vorrichtung zum Manövrieren nach Anspruch 4, wobei die Positionen der Schwingarme (21, 22) so eingerichtet sind, dass eine Ebene, die durch die sekundäre Rotationsachse (SS') und durch die Gelenkachse (dd') des zweiten Schwingarms (22) auf dem zweiten Kippelement (24) verläuft, zu der Ebene der Klappe (1) im Wesentlichen parallel ist.

6. Vorrichtung zum Manövrieren nach einem der Ansprüche 2 bis 5, wobei die mechanischen Mittel (2) ein Antriebsrad (25) umfassen, das zur Drehung um eine Hauptachse (XX') parallel zu der Schwenkachse (AA') angetrieben ist, wobei mindestens eine Fläche (25, 252) der durch das Antriebsrad (25) gebildeten Scheibe eine Spindel (253, 254) aufweist, die gestattet, das erste Kippelement (23) bzw. das zweite Kippelement (24) aus einer Position in eine andere und umgekehrt zu drehen.

7. Vorrichtung zum Manövrieren nach Anspruch 6, wobei jedes Kippelement (23, 24) einen radialen Schlitz (230, 240) umfasst, in dem eine Spindel (253, 254) zirkuliert, um das Kippelement (23, 24) aus einer Position in eine andere um die sekundäre Rotationsachse (SS') herum schwenken zu lassen.

8. Vorrichtung zum Manövrieren nach Anspruch 7, wobei das Antriebsrad (25) mindestens eine kreisförmige Sperrscheibe (26, 27) umfasst, mit der gleichen Rotationsachse wie das Antriebsrad (25), die erhöht angeordnet ist auf jeder der Flächen (251, 252) der durch das Antriebsrad (25) gebildeten Scheibe, die eine Spindel (253, 254) aufweist, deren Radius (r1, r2) kleiner ist als der Abstand (r3, r4) zu der Hauptachse (XX') der Spindel (253, 254), und die mindestens einem Kippelement (23, 24) gegenüber platziert ist.

9. Vorrichtung zum Manövrieren nach Anspruch 8, wobei das Antriebsrad (25) zwei Sperrscheiben (23, 24) umfasst, die jede auf einer der Flächen (251, 252) der durch das Antriebsrad (25) gebildeten Scheibe angeordnet sind, wobei jede dieser Flächen (252, 252) eine Spindel (253, 254) aufweist, und wobei die Kippelemente (23, 24) rechtwinklig zu jeder der Sperrscheiben (26, 27) angeordnet sind, auf beiden Seiten der durch das Antriebsrad gebildeten Scheibe.

10. Vorrichtung zum Manövrieren nach einem der Ansprüche 8 oder 9, wobei jedes Kippelement (23, 24) zwei halbkreisförmige Ausschnitte (231, 232, 241, 242) umfasst, die eine erste bzw. eine zweite Position des Kippelements definieren, die auf beiden Seiten des radialen Schlitzes (230, 240) angeordnet sind, wobei jeder halbkreisförmige Ausschnitt (231, 232, 241, 242) einen Radius (r1, r₂) gleich dem Radius (r1, r2) der Sperrscheibe (26, 27) aufweist, der gegenüber das Kippelement (23, 24) platziert ist.

11. Vorrichtung zum Manövrieren nach Anspruch 10, wobei, wenn ein Kippelement (23, 24) in einer Position platziert ist, die Mitte eines halbkreisförmigen Ausschnitts (231, 232, 241, 242) auf der Hauptachse (XX') angeordnet ist, so dass das Kippelement (23, 24) durch die Sperrscheibe (26, 27) in seiner Drehung gesperrt ist, der gegenüber es platziert ist.

12. Vorrichtung zum Manövrieren nach Anspruch 11, wobei, wenn das erste und das zweite Kippelement (23, 24) jedes in einer bestimmten Position platziert sind, das Drehmoment, das auf die Hauptachse (XX') aufgebracht wird und aus den Kräften resultiert, die auf die Klappe ausgeübt werden, gleich null ist.

13. Vorrichtung zum Manövrieren nach einem der Ansprüche 8 bis 12, wobei jede Sperrscheibe (26, 27) eine Ausnehmung (260, 270) aufweist, die radial rechtwinklig zu der Spindel (253, 254) angeordnet ist, um das Schwenken des Kippelements zu gestatten, wenn dieses letzte seine Position ändert.

14. Vorrichtung zum Manövrieren nach einem der Ansprüche 3 bis 13, wobei:
- die Klappe (1) in der eingefahrenen Position ist, wenn das erste Kippelement (23) in einer ersten Position ist,
- die Klappe in der ausgefahrenen Position ist, wenn das erste Kippelement (23) in einer zweiten Position ist.

15. Vorrichtung zum Manövrieren nach einem der Ansprüche 3 bis 13, wobei:
- die Klappe parallel zu dem Luftstrom ist, der auf dem Karosserieelement zirkuliert, das die Klappe trägt, wenn das Fahrzeug in Bewegung ist, wenn das zweite Kippelement (24) in einer ersten Position ist,
- die Klappe in geschwenkter Position ist, wenn das zweite Kippelement (24) in einer zweiten Position ist.

16. Vorrichtung zum Manövrieren nach Anspruch 14, in Kombination mit Anspruch 15, wobei, wenn das Antriebsrad (25) eine Winkelstrecke kleiner als 360° vollführt, die jeweiligen Anordnungen der Kippelemente und der Spindeln winklig um die Hauptachse (XX') herum angepasst werden, so dass die Positionsänderung des ersten Kippelements (23) erfolgt, wenn das zweite Kippelement (24) in der ersten Position angeordnet ist, und dass die Positionsänderung des zweiten Kippelements (24) erfolgt, wenn das erste Kippelement (23) in der zweiten Position angeordnet ist.

17. Vorrichtung zum Manövrieren nach einem der Ansprüche 6 bis 16, wobei das Antriebsrad (25) wird unter der Wirkung eines Motors (3) gedreht, der mit einem Getriebemotor (31) gekoppelt ist.

## Claims

1. A device for maneuvering an aerodynamic flap (1) arranged on a motor vehicle, wherein it comprises mechanical means (2) for causing the flap (1) to pass from a retracted position to a deployed position, by performing movements in a given order:
- extending the flap while keeping the plane of the flap parallel to the direction of an air flow circulating around the flap (1) when the vehicle is moving, such that the aerodynamic pressure exerted on the flap when the vehicle is moving is substantially zero, then
- pivoting the flap about a pivot axis (AA') situated in a plane of the flap and passing substantially through a center of aerodynamic thrust (10) of the flap (1), such that the torque applied on the pivot axis (AA')and resulting from the aerodynamic forces exerted on the flap when the vehicle is moving is substantially zero,
and, conversely, from a deployed position to a retracted position by performing said movements in reverse order.

2. The maneuvering device as claimed in claim 1, in which the mechanical means (2) comprise a secondary rotation (SS') axis which is parallel to the pivot axis (AA') and about which are articulated a first rocker (23), which is connected to the aerodynamic flap (1) by a first link rod (21) and of which the change of position brings about the extending or retracting movement of the flap (1), and a second rocker (22), which is connected to the flap by a second link rod and of which the change of position brings about the pivoting movement of the flap (1).

3. The maneuvering device as claimed in claim 2, in which the first (21) and second (22) link rod are attached, by first (210, 220) and second (211, 221) articulations respectively arranged at both ends of each of the link rods (21, 22) and whose axes (aa', bb', cc', dd'), are parallel to the pivot axis (AA') to a face (1) of the flap on the one hand and to said rockers (23, 24) on the other, and in which the projections on a plane (P) perpendicular to the pivot axis (AA'), of the axes (aa', bb', cc', dd') of said articulations (210, 211, 220, 221) are substantially arranged at the four corners of a deformable parallelogram.

4. The maneuvering device as claimed in claim 3, in which:
- the first link rod (21) is connected to the flap (1) by its first articulation (210), whose axis (aa') is coincident with the pivot axis (AA'), and to the first rocker (23) by its second articulation (211), whose axis (bb') is coincident with the secondary rotation axis (SS'), such that the first link rod (21) pivots about the secondary rotation axis (SS') when the first rocker (23) changes position,
- the second link rod (23) is connected to the second rocker (24) by its second articulation (221) arranged radially at a given distance d from the secondary rotation axis (SS'), and to the flap (1) by its first articulation (220) arranged at the same distance d from the pivot axis (AA') of the flap.

5. The maneuvering device as claimed in claim 4, in which the positions of the link rods (21, 22) are set up such that a plane passing through the secondary axis (SS') and through the axis of the articulation (dd') of the second link rod (22) on the second rocker (24) is substantially parallel to the plane of the flap (1).

6. The maneuvering device as claimed in one of claims 2 through 5, in which the mechanical means (2) comprise a drive wheel (25) driven in rotation about a main axis (XX') parallel to the axis pivot (AA'), at least one face (251, 252) of the disk formed by the drive wheel (25) having a pin (253, 254) for moving the first (23) and second (24) rockers in rotation from one position to another and vice versa.

7. The maneuvering device as claimed in claim 6, in which each rocker (23, 24) comprises a radial slot (230, 240) in which circulates a pin (253, 254) for causing said rocker (23, 24) to pivot from one position to another about the secondary rotation axis (SS').

8. The maneuvering device as claimed in claim 7, in which the drive wheel (25) comprises at least one circular blocking disk (26, 27) which has the same rotation axis (XX') as the drive wheel and is arranged in elevation on each of the faces (251, 252) of the disk formed by the drive wheel (25) having a pin (253, 254), of which the radius (r₁, r₂) is less than the distance (r₃, r₄) to the main axis (XX') of said pin (253, 254), and placed opposite at least one rocker (23, 24).

9. The maneuvering device as claimed in claim 8, in which the drive wheel (25) comprises two blocking disks (23, 24), each arranged on one of the faces (251, 252) of the disk formed by the drive wheel (25), each of these faces (251, 252) having a pin (253, 254), and in which the rockers (23, 24) are arranged in line with each of the blocking disks (26, 27) on either side of the disk formed by the drive wheel.

10. The maneuvering device as claimed in claim 8 or 9, in which each rocker (23, 24) comprises two semi-circular cutouts (231, 232, 241, 242) respectively defining a first and a second position of the rocker, arranged on either side of the radial slot (230, 240), each semi-circular cutout (231, 232, 241, 242) having a radius (r₁, r₂) equal to the radius (r₁, r₂) of the blocking disk (26, 27) opposite which said rocker (23, 24) is placed.

11. The maneuvering device as claimed in claim 10, in which, when a rocker (23, 24) is placed in a position, the center of a semi-circular cutout (231, 232, 241, 242) is arranged on the main axis (XX'), such that said rocker (23, 24) is blocked in rotation by the blocking disk (26, 27) opposite which it is placed.

12. The maneuvering device as claimed in claim 11, in which, when the first and second rocker (23, 24) are each placed in a given position, the torque applied to the main rotation axis (XX') and resulting from forces exerted on the flap is zero.

13. The maneuvering device as claimed in one of claims 8 through 12, in which each blocking disk (26, 27) has a recess (260, 270) arranged radially in line with the pin 253, 254), so as to permit the pivoting of the rocker when the latter changes position.

14. The maneuvering device as claimed in one of claims 3 through 13, in which:
- the flap (1) is in the retracted position when the first rocker (23) is in a first position,
- the flap is in the extended position when the first rocker (23) is in a second position.

15. The maneuvering device as claimed in one of claims 3 through 13, in which:
- the flap is parallel to the air flow circulating on the bodywork element supporting the flap when the vehicle is moving, when the second rocker (24) is in a first position,
- the flap is in the pivoted position when the second rocker (24) is in a second position.

16. The maneuvering device as claimed in claim 14 taken in combination with claim 15, in which, when the drive wheel (25) travels over an angular path of less than 360°, the respective arrangements of the rockers and the pins are adjusted angularly about the main axis (XX') such that the change of position of the first rocker (23) takes place when the second rocker (24) is arranged in the first position, and such that the change of position of the second rocker (24) takes place when the first rocker (23) is arranged in the second position.

17. The maneuvering device as claimed in one of claims 6 through 16, in which the drive wheel (25) is rotated under the action of a motor (3) coupled to a geared motor (31) .
